(19) Europäisches Patentamt
European Patent Office
Office européen des brevets

(11) EP 0 505 277 B1

(12) FASCICULE DE BREVET EUROPEEN

(45) Date de publication et mention de la délivrance du brevet:
**05.06.1996 Bulletin 1996/23**

(51) Int Cl.[6]: **C22B 3/00**, C22B 60/02, C22B 59/00, G21C 19/46, C01F 17/00, C01G 56/00

(21) Numéro de dépôt: **92400741.2**

(22) Date de dépôt: **19.03.1992**

(54) **Procédé pour séparer le fer et/ou le zirconium des actinides et/ou des lanthanides présents dans une solution aqueuse acide au moyen d'un propanediamide**

Verfahren zur Abtrennung von Eisen und/oder Zirkonium aus Aktiniden und/oder Lanthaniden enthaltenden wässrigen Säurelösungen mittels eines Propandiamids

Method for separating iron and/or zirconium from actinides and/or lanthanides present in an aqueous acid solution using a propane diamide

(84) Etats contractants désignés:
**DE GB IT**

(30) Priorité: **21.03.1991 FR 9103453**

(43) Date de publication de la demande:
**23.09.1992 Bulletin 1992/39**

(73) Titulaire: **COMMISSARIAT A L'ENERGIE ATOMIQUE**
**F-75015 Paris (FR)**

(72) Inventeurs:
- **Cuillerdier, Christine**
  **F-75018 Paris (FR)**
- **Hoel, Pierre**
  **F-91120 Palaiseau (FR)**
- **Musikas, Claude**
  **F-91440 Bures sur Yvette (FR)**
- **Nigond, Laurence**
  **F-92260 Fontenay aux Roses (FR)**

(74) Mandataire: **Des Termes, Monique et al**
**Société Brevatome**
**25, rue de Ponthieu**
**75008 Paris (FR)**

(56) Documents cités:
**EP-A- 0 110 789** **EP-A- 0 210 928**
**EP-A- 0 228 940** **EP-A- 0 381 579**

- **METADEX, No 90 (7):42-744 Solvent Extr. Ion Exch. (1989) 7, (5), pages 813 - 827, Thiollet et al.: "Synthesis and uses of the Amides Extractants."**
- **METADEX 89 (3):42-331 Sep. Sci. Technol. (1988) 23, (12-13), pages 1211-1226, Musikas: "Potentiality of Nonorgano phosphorus Extract. in Chem. Sep. of Actinides"**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Printed by Jouve, 75001 PARIS (FR)

EP 0 505 277 B1

## Description

La présente invention a pour objet un procédé pour séparer le fer et/ou le zirconium des actinides et/ou des lanthanides présents dans une solution aqueuse acide telle qu'une solution nitrique provenant en particulier d'une usine de retraitement de combustibles nucléaires irradiés.

Dans les installations de retraitement de combustibles nucléaires irradiés, on obtient habituellement au premier stade d'extraction de l'uranium et du plutonium, des solutions aqueuses de produits de fission contenant des quantités relativement importantes d'ions trivalents de la série des lanthanides et des actinides et des produits de fission ou de corrosion tels que le fer et le zirconium. Les effluents aqueux provenant de ces installations contiennent également ces mêmes ions.

Compte tenu de la période relativement longue des éléments actinides et lanthanides trivalents, il est d'un grand intérêt de séparer ceux-ci des solutions aqueuses afin d'éviter la manipulation de déchets ou d'effluents ayant une activité alpha élevée. Toutefois, il n'est pas avantageux d'extraire en même temps que ces ions trivalents les produits de fission ou de corrosion tels que le fer et le zirconium, qui sont beaucoup moins gênants puisqu'ils ne sont pas des émetteurs alpha.

Jusqu'à présent on a séparé les actinides et lanthanides trivalents présents dans ces solutions aqueuses en utilisant des extractants organiques, par exemple des composés bifonctionnels chélatants tels que l'octylphényl N,N-diisobutylcarbamoylméthylphosphine oxyde et le dihexyldiéthylcarbamoylméthylène phosphonate comme il est décrit par G.F. Vandegrift et al dans ANL 84-45 (1984) et par R.A. Léonard et al dans ANL 85-45 (1985).

Ces extractants sont efficaces pour séparer les actinides trivalents mais ils présentent un certain nombre d'inconvénients. En effet, ils ne sont pas complètement incinérables à cause de la présence du phosphore ; ils produisent sous l'effet de l'hydrolyse et de la radiolyse des composés gênants susceptibles de donner des précipités ou de créer des rétentions d'actinides à la désextraction ; de plus, ils sont coûteux et difficiles à purifier.

Pour séparer les actinides et lanthanides présents dans des solutions aqueuses, on peut aussi utiliser des propanediamides substitués, comme il est décrit dans les documents EP-A- 0 110 789 et EP-A- 0 210 928.

Ces propanediamides qui sont des extractants bifonctionnels, permettent l'extraction des actinides et des lanthanides trivalents en milieu nitrique. Ils ne contiennent pas de phosphore et sont par conséquent complètement incinérables, ce qui évite la production d'autres déchets. Leurs produits de dégradation radiolytiques ou hydrolytiques ne sont pas gênants car ils ne créent pas de précipités ou de rétention d'actinides. Néanmoins, ils extraient également des métaux tels que le fer et le zirconium qu'il serait intéressant de laisser en solution aqueuse lors de l'extraction des actinides et des lanthanides trivalents.

La présente invention a précisément pour objet un procédé de séparation des actinides et lanthanides trivalents au moyen de propanediamides, qui permet de séparer ces actinides et lanthanides des produits de fission ou de corrosion tels que le fer et le zirconium présents dans une solution aqueuse acide.

Selon l'invention, on utilise pour cette séparation des propanediamides pentasubstitués répondant à la formule :

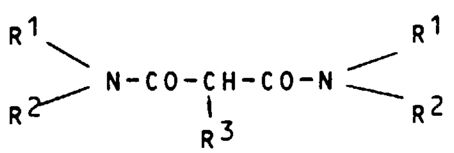 (I)

dans laquelle $R^1$, $R^2$ et $R^3$ qui peuvent être identiques ou différents, sont des radicaux alkyle linéaires ou ramifiés de 1 à 25 atomes de carbone comportant éventuellement dans leur chaîne 1 ou 2 atomes d'oxygène.

Pour séparer le fer et éventuellement le zirconium des actinides et/ou des lanthanides, on peut, soit utiliser la différence de cinétique d'extraction du fer par rapport aux actinides et lanthanides trivalents en choisissant un propane diamide approprié, soit ajouter à la solution aqueuse de départ un composé qui permet d'empêcher l'extraction du fer et/ou du zirconium, par exemple de l'acide oxalique ou un nitrate sauf le nitrate de lithium.

Aussi, selon un premier mode de réalisation, le procédé de l'invention pour séparer le fer des actinides et/ou des lanthanides trivalents présents dans une solution aqueuse acide, consiste :

a) à mettre en contact la solution aqueuse acide avec un solvant organique contenant comme extractant un propanediamide de formule :

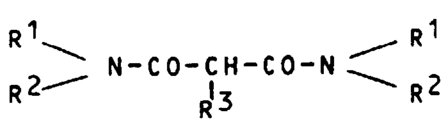 (I)

dans laquelle $R^1$ et $R^2$ qui peuvent être identiques ou différents, représentent un radical alkyle linéaire ou ramifié

ayant de 1 à 25 atomes de carbone ou un radical de formule :

$$-(CH_2)_n-Z-(CH_2)_m-O-R^4$$

dans laquelle $R^4$ est un radical alkyle de 1 à 13 atomes de carbone, n est égal à 0 ou est un nombre entier allant de 1 à 6, Z est une simple liaison ou un atome d'oxygène et m est un nombre entier allant de 1 à 6, à condition que Z soit une simple liaison lorsque n est égal à 0, et $R^3$ représente un radical alkyle de 12 à 25 atomes de carbone, pendant une durée de 15 secondes à 5 minutes, et

b) à séparer le solvant organique ayant extrait les actinides et/ou les lanthanides de la solution aqueuse contenant le fer.

Dans ce premier mode de réalisation du procédé de l'invention, on choisit ainsi un propanediamide pentasubstitué de formule (I) dans laquelle $R^3$ est un radical alkyle de 12 à 25 atomes de carbone pour obtenir une différence de cinétique d'extraction entre les actinides et/ou les lanthanides, d'une part, et le fer, d'autre part, et réaliser de la sorte la séparation fer / actinides et/ou lanthanides trivalents.

En effet, on a remarqué qu'avec de tels propanediamides, la vitesse d'extraction des actinides et des lanthanides est très rapide puisque l'équilibre est pratiquement atteint au bout de 15 secondes, alors que la vitesse d'extraction du fer est plus lente, l'équilibre étant atteint après des durées qui peuvent aller de 5 à 30min et plus, selon l'acidité de la solution aqueuse de départ car la vitesse d'extraction du fer décroît lorsque l'acidité de la solution aqueuse augmente. Aussi, pour assurer cette séparation, lorsque la solution aqueuse est une solution nitrique, on ajuste de préférence la concentration en acide nitrique de cette solution à une valeur allant de 2 à 5mol/l.

Avec de tels propanediamides, on a aussi observé que la vitesse d'extraction du fer décroît lorsque la concentration en diamide du solvant organique augmente. Aussi, on utilise avantageusement un solvant ayant une concentration en propanediamide de 0,1 à 2 mol/l.

En revanche, si l'on utilisait un propanediamide de formule (I) avec $R^3$ représentant un radical alkyle comportant dans sa chaîne un ou deux atomes d'oxygéne, la vitesse d'extraction du fer serait également lente mais la différence de vitesse d'extraction entre le fer et les actinides et lanthanides serait trop faible pour être exploitable en vue d'assurer la séparation fer / lanthanides et/ou actinides trivalents.

Ce premier mode de réalisation du procédé de l'invention est très avantageux car il permet de réaliser la séparation des actinides et des lanthanides en faisant simplement varier les temps de contact sans ajouter de produits qui pourraient être gênants.

Toutefois, selon l'invention, on peut également séparer les produits de corrosion tels que le fer et le zirconium, des actinides et/ou des lanthanides trivalents en utilisant l'adjonction de produits qui ne sont pas gênants.

Aussi, selon un deuxième mode de réalisation, le procédé de l'invention pour séparer le fer et/ou le zirconium des actinides et/ou des lanthanides trivalents présents dans une solution aqueuse acide, consiste

a) à ajouter de l'acide oxalique à la solution aqueuse,

b) à mettre en contact la solution aqueuse acide contenant l'acide oxalique, avec un solvant organique contenant comme extractant un propanediamide de formule :

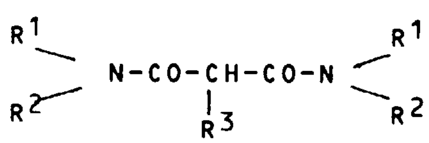

(I)

dans laquelle $R^1$ et $R^2$ qui peuvent être identiques ou différents, représentent un radical alkyle linéaire ou ramifié ayant de 1 à 25 atomes de carbone ou un radical de formule :

$$-(CH_2)_n-Z-(CH_2)_m-O-R^4$$

dans laquelle $R^4$ est un radical alkyle de 1 à 13 atomes de carbone, n est égal à 0 ou est un nombre entier allant de 1 à 6, Z est une simple liaison ou un atome d'oxygène et m est un nombre entier allant de 1 à 6, à condition que Z soit une simple liaison lorsque n est égal à 0, et $R^3$ représente un radical alkyle de 12 à 25 atomes de carbone ou un radical de formule :

$$-(CH_2)_n-Z-(CH_2)_m-O-R^4$$

dans laquelle m, Z et $R^4$ ont la signification donnée ci-dessus, et

c) à séparer le solvant organique ayant extrait les actinides et/ou les lanthanides de la solution aqueuse contenant le fer et/ou le zirconium.

Dans ce second mode de réalisation du procédé de l'invention, on tire profit du pouvoir complexant de l'acide

oxalique pour séparer facilement les actinides et lanthanides du fer et/ou du zirconium.

En choisissant de façon appropriée les concentrations en acide oxalique et l'acidité de la solution aqueuse ainsi que les conditions d'extraction, en particulier les volumes de solution aqueuse et de solvant organique mis en contact, on peut obtenir une séparation efficace entre les actinides et/ou les lanthanides, d'une part, et le fer et/ou le zirconium, d'autre part.

Avantageusement, la quantité d'acide oxalique ajoutée à la solution aqueuse acide est telle que la concentration en acide oxalique de la solution aqueuse soit de 0,05 à 0,5mol/l.

De préférence, lorsque la solution aqueuse est une solution nitrique, sa concentration en acide nitrique est de 2 à 4mol/l.

A titre d'exemple de propanediamide susceptible d'être utilisé dans ce second mode de réalisation du procédé de l'invention, on peut citer les propanediamides de formule (I) dans laquelle $R^1$ représente $CH_3$, $R^2$ représente $C_4H_9$ et $R^3$ représente $C_2H_4OC_6H_{13}$ ou $C_2H_4OC_2H_4OC_6H_{13}$.

Selon un troisième mode de réalisation, le procédé de l'invention pour séparer le fer des actinides et/ou des lanthanides trivalents présents dans une solution aqueuse acide consiste

a) à ajouter à la solution aqueuse acide un nitrate de formule $(NO_3)M_v$ dans laquelle M est $NH_4$ ou un métal sauf Li et v est la valence de ce métal,

b) à mettre en contact la solution aqueuse acide ainsi traitée avec un solvant organique contenant comme extractant un propanediamide de formule :

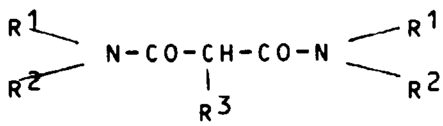

(I)

dans laquelle $R^1$ et $R^2$ qui peuvent être identiques ou différents, représentent un radical alkyle linéaire ou ramifié ayant de 1 à 25 atomes de carbone ou un radical de formule :

$$-(CH_2)_n-Z-(CH_2)_m-O-R^4$$

dans laquelle $R^4$ est un radical alkyle de 1 à 13 atomes de carbone, n est égal à 0 ou est un nombre entier allant de 1 à 6, Z est une simple liaison ou un atome d'oxygène et m est un nombre entier allant de 1 à 6, à condition que Z soit une simple liaison lorsque n est égal à 0, et $R^3$ représente un radical alkyle de 12 à 25 atomes de carbone ou un radical de formule :

$$-(CH_2)_n-Z-(CH_2)_m-O-R^4$$

dans laquelle n, m, Z et $R^4$ ont la signification donnée ci-dessus, et

c) séparer le solvant organique ayant extrait les actinides et/ou les lanthanides de la solution aqueuse contenant le fer.

Dans ce troisième mode de réalisation de l'invention, on tire profit du fait que l'addition de nitrate en forte concentration produit un effet relargant sur les actinides et les lanthanides et donc une augmentation des coefficients d'extraction, alors que cet effet ne se produit pas avec le fer. Toutefois, pour tirer parti de cet effet, il est nécessaire que le fer ne soit pas extrait rapidement de la solution aqueuse. Or, on sait que le fer et les lanthanides sont fortement extraits en milieu acide concentré alors qu'ils le sont faiblement en milieu acide dilué.

Aussi, dans ce troisième mode de réalisation, l'acidité doit être faible. Ainsi, dans le cas de solutions aqueuses nitriques, la concentration en acide nitrique de la solution aqueuse est de préférence inférieure à 0,1mol/l.

En revanche, la concentration en nitrate doit être suffisamment élevée pour qu'on puisse obtenir l'effet relargant du nitrate sur les actinides et les lanthanides.

Avantageusement, la concentration en nitrate, c'est-à-dire en $NO_3^-$ du composé $(NO_3)_vM$ est d'au moins 6mol/l.

Les propanediamides utilisés dans les trois modes de réalisation du procédé de l'invention, peuvent être préparés par des procédés classiques, en particulier par les procédés décrits dans FR-A-2 585 700.

Ainsi, on peut les préparer à partir des propanediamides tétrasubstitués de formule :

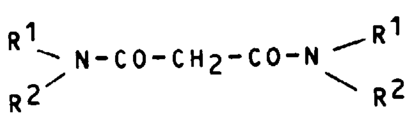

par réaction avec le n-butyllithium suivie d'une condensation avec un halogénure de formule $R^3X$ dans laquelle X représente un atome d'halogène.

Les halogénures de formule $R^3X$ sont de préférence des bromures ou des iodures, et ils peuvent être préparés lorsque $R^3$ comprend un groupement éther-oxyde, en utilisant le procédé décrit par F.C. Cooper et M.W. Partridge dans J. Chem. Soc., (1950), p. 459.

Les propanediamides tétrasubstitués utilisés comme produits de départ peuvent être préparés par amination du chlorure de malonyle au moyen des amines correspondantes de formule :

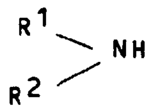

dans laquelle $R^1$ et $R^2$ ont la signification donnée ci-dessus.

Les amines $HNR^1R^2$ peuvent être préparées par des procédés classiques, en particulier par la méthode décrite par J.L. Nelson et- R.C. Sentz dans J. Amer. Chem. Soc., vol. 74, p. 1704, (1952).

Lorsqu'on utilise les procédés décrits ci-dessus pour préparer les propanediamides utilisés dans l'invention, le propanediamide obtenu est constitué par un mélange d'isomères. Selon l'invention, on peut utiliser comme agent d'extraction, l'un de ces isomères ou un mélange de ceux-ci, et l'on précise que les formules données ici représentent indifféremment l'un des isomères ou le mélange d'isomères.

Selon l'invention, le solvant organique utilisé pour l'extraction est généralement constitué par un diluant organique contenant en solution le propanediamide de formule (I). La concentration en propanediamide du solvant peut aller par exemple de 0,1 à 2mol/l.

Toutefois, bien que le taux d'extraction des actinides et des lanthanides augmente avec la concentration en propanediamide du solvant organique, on préfère utiliser des concentrations en propanediamide du solvant organique ne dépassant pas 1mol/l pour obtenir une bonne séparation du fer et/ou éventuellement des autres produits de corrosion.

Les diluants organiques susceptibles d'être utilisés sont des diluants organiques inertes ayant de préférence une constante diélectrique peu élevée.

A titre d'exemple de tels diluants, on peut citer les diluants aromatiques tels que le benzène, le xylène, le mésitylène, le tertiobutylbenzène, les diluants aliphatiques tels que le dodécane, le tétrapropylène hydrogéné, les diluants cycliques tels que la décaline et les diluants chlorés tels que le tétrachloréthylène.

Ainsi, les propanediamides de l'invention sont plus intéressants à utiliser que les propanediamides du EP-A- 0 210 928 car on peut les utiliser non seulement avec des diluants aromatiques mais aussi avec des diluants aliphatiques, des diluants cycliques et des diluants chlorés. Par ailleurs, ils ne donnent pas lieu à la formation d'une troisième phase en présence de solutions nitriques concentrées.

Le procédé de l'invention peut être mis en oeuvre dans tout appareillage classique d'extraction tel que des batteries de mélangeurs décanteurs, des colonnes d'échange, par exemple des colonnes pulsées, des extracteurs centrifuges, etc. Généralement, on opère à la pression et à la température ambiantes avec des rapports en volume : solution aqueuse/solvant organique qui peuvent varier de 0,1 à 10.

Les actinides et les lanthanides extraits dans le solvant organique peuvent ensuite être récupérés avec de très bons rendements, par réextraction dans de l'eau.

Les solutions aqueuses de départ sont des solutions acides, par exemple des solutions chlorhydriques, et de préférence des solutions nitriques.

D'autres caractéristiques et avantages de l'invention apparaîtront mieux à la lecture des exemples suivants donnés bien entendu à titre illustratif et non limitatif.

**Exemple 1 :** Préparation du 2-tétradécyl-N,N'-diméthyl-N,N'-dibutyl-propanediamide (composé n°1).

Dans un réacteur de 1l, balayé par un courant d'argon, on introduit 0,1mol du N,N'-diméthyl-N,N'-dibutyl-propanediamide dissous dans 400ml de tétrahydrofurane. On refroidit à -50°C à l'aide d'un bain d'acétone et de carboglace et on coule une solution de N-butyllithium préparée à partir de 0,1mol de N-butyllithium dans 100ml de tétrahydrofurane anhydre. Dans les mêmes conditions, on coule une solution d'iodure de tétradécyle préparée à partir de 0,1mol d'iodure de tétradécyle et de 100ml de tétrahydrofurane anhydre. La coulée terminée, on laisse remonter la température à l'ambiante, puis on chauffe 3h au reflux du tétrahydrofurane. On laisse refroidir, puis on hydrolyse avec un mélange eau-éthanol. On chasse le tétrahydrofurane et l'on forme ainsi un précipité. On reprend l'ensemble au chlorure de méthylène, on lave à l'eau, on sèche la couche organique, puis on chasse le solvant avant de distiller.

Sa caractérisation par résonance magnétique nucléaire du proton et par dosage potentiométrique confirme qu'il correspond à la formule donnée dans le tableau 1 joint.

**Exemple 2 :** Préparation du 2-éthoxydodécyl-N,N′-diméthyl-N,N′-dibutyl-propanediamide (composé n°2).

On suit le même mode opératoire que dans l'exemple 1 pour préparer le composé n° 2 à partir de N,N′-diméthyl-N,N′-dibutyl-propanediamide en utilisant 0,1mol de bromure d'éthoxydodécyle au lieu de 0,1mol d'iodure d'hexyle.

On obtient ainsi le composé n° 2 répondant à la formule donnée dans le tableau 1 joint.

**Exemple 3 :** Préparation du 2-dodécyl-N,N′-diméthyl-N,N′-dibutyl-propanediamide (composé n°3).

On suit le même mode opératoire que dans l'exemple 1 pour préparer le composé n° 3 à partir du N,N′-diméthyl-N,N′-dibutyl-propanediamide en utilisant 0,1mol d'iodure de dodécyle au lieu de 0,1mol d'iodure d'hexyle.

On obtient ainsi le composé n° 3 répondant à la formule donnée dans le tableau 1.

**Exemple 4 :** Préparation du 2-étoxyhexyl-N,N′-diméthyl-N-N′-dibutyl-propanediamide (composé n° 4).

On suit le même mode opératoire que dans l'exemple 1 pour préparer le composé n° 4 en partant du N,N′-diméthyl-N,N′-dibutyl-propanediamide et en utilisant 0,1mol de bromure d'étoxyhexyle au lieu de 0,1mol d'iodure de tétradécyle.

On obtient ainsi le composé n° 4, répondant à la formule donnée dans le tableau 1.

**Exemple 5 :** Préparation du 2-éthoxy-éthoxyhexyl-N,N′-diméthyl-N,N′-dibutyl-propanediamide (composé n°5)

On suit le même mode opératoire que dans l'exemple 1, sauf que l'on utilise 0,1mol de bromure d'éthoxyéthoxyhexyle au lieu de 0,1mol d'iodure de tétradécyle.

On obtient ainsi le composé n° 5 répondant à la formule donnée dans le tableau 1.

**Exemple 6 :** Préparation du 2-hexadécyl-N,N′-tétraméthyl-propanediamide (composé n° 6).

On suit le même mode opératoire que dans l'exemple 1 pour préparer ce composé à partir de N,N′-tétraméthyl-propanediamide en utilisant 0,1mol d'iodure d'hexadécyle au lieu de 0,1mol d'iodure de tétradécyle.

On obtient ainsi le composé n° 6 répondant à la formule donnée dans le tableau 1.

**Exemple 7 .**

Cet exemple illustre l'utilisation du 2-tétradécyl-N,N′-diméthyl-N,N′-dibutyl-propanediamide (composé n°1) pour séparer le fer de l'américium conformément au premier mode de réalisation du procédé de l'invention.

Dans cet exemple, on réalise plusieurs essais en mettant en contact un volume d'une solution aqueuse nitrique ayant une concentration en acide nitrique de 2,5mol/l comprenant des traces d'américium et de fer avec un volume d'un solvant organique constitué de tétrapropyléne hydrogéné (TPH) contenant 0,5mol/l du composé n° 1.

Après mise en contact sous agitation pendant des durées allant de 15s à 20min à 25°C, on sépare les deux phases et on mesure leurs concentrations respectives en américium et en fer. On détermine ensuite les coefficients de partage $D_{Am}$ et $D_{Fe}$ qui correspondent au rapport de la concentration de l'élément (Am ou Fe) dans le solvant organique sur la concentration de ce même élément (Am ou Fe) dans la solution aqueuse. On détermine également le facteur de décontamination FD qui correspond au rapport $D_{Am} / D_{Fe}$.

Les résultats obtenus sont donnés dans le tableau 2 qui suit.

Au vu de ces résultats, on constate que l'américium est extrait très rapidement puisqu'au bout de 15s d'agitation, l'équilibre est quasiment atteint. En revanche, l'extraction du fer est plus lente puisque cet équilibre n'est atteint qu'au bout de 5 à 10min.

**Exemple 8.**

Dans cet exemple, on utilise également le composé n° 1 pour séparer le fer de l'américium à partir de solutions de départ contenant également des traces d'américium et de fer, dont on règle l'acidité nitrique à 4mol/l. Le solvant organique est constitué par du TPH contenant 0,5mol/l de composé n° 1, et on opère comme dans l'exemple 7 en mettant en contact sous agitation un volume du solvant organique avec un volume de la solution aqueuse à 25°C, pendant des durées allant de 15s à 40min.

Les résultats obtenus sont donnés dans le tableau 2.

**Exemple 9.**

On suit le même mode opératoire que dans l'exemple 7 pour séparer le fer de l'américium, mais en utilisant une concentration en composé n°1 de 0,767mol/l et en réglant l'acidité nitrique de la solution aqueuse à 3mol/l.

Les résultats obtenus sont donnés dans le tableau 2 pour des temps de contact allant de 0,25min à 60min.

Au vu des résultats des exemples 7 à 9, on remarque que l'effet de séparation fer - américium augmente avec la concentration en extractant organique et la concentration en acide nitrique de la solution aqueuse de départ et que l'on peut obtenir des FD élevés en utilisant des temps de contact de 15s à 5min.

**Exemple 10**

Dans cet exemple, on utilise également le composé n° 1 pour séparer l'américium à partir d'une solution aqueuse de départ contenant des traces d'américium et de fer, ayant une concentration en acide nitrique de 2,5mol/l.

Le solvant organique est constitué par du benzène contenant 0,5mol/l de composé n° 1.

Pour réaliser l'extraction, on met en contact un volume de la solution aqueuse avec un volume du solvant organique, sous agitation, pendant 0,5 minute à 25°C. On sépare alors les deux phases, on mesure leur concentration en américium et on détermine le coefficient de partage $D_{Am}$.

On trouve que $D_{Am} = 0,24$.

**Exemple 11.**

On suit le même mode opératoire que dans l'exemple 10 pour séparer l'américium à partir de la même solution aqueuse mais en utilisant comme solvant organique du benzène contenant 0,5mol/l du composé n° 6.

Dans ces conditions $D_{Am}$ est égal à 1,38.

Ainsi, si l'on compare ces résultats avec ceux de l'exemple 10, on remarque que l'allongement de la chaîne hydrocarbonée qui correspond à $R^3$ dans le composé de formule (I) de l'invention permet d'obtenir une meilleure extraction de l'américium.

**Exemples 12 à 15.**

Dans ces exemples, on utilise le second mode de réalisation du procédé de l'invention, soit l'adjonction d'acide oxalique pour séparer le fer de l'américium présents dans une solution aqueuse nitrique ayant une concentration en acide nitrique de 3mol/l contenant des traces de $Am^{3+}$ et de 0,05 à 0,2mol/l de Fe3+.

Dans ce cas, on utilise comme solvant organique le composé n°4 à une concentration de 0,5mol/l dans du t-butylbenzène, et on ajoute à la solution aqueuse 0,213 ou 0,5mol/l d'acide oxalique, puis on met en contact sous agitation un volume de cette solution aqueuse avec un volume du solvant organique, à 25°C pendant 10min. On sépare alors les deux phases et on détermine les coefficients de distribution $D_{Am}$ et $D_{Fe}$ de l'américium et du fer.

Les résultats obtenus ainsi que les concentrations en fer et en acide oxalique des solutions aqueuses de départ sont donnés dans le tableau 3.

Au vu de ces résultats, on constate que, pour des concentrations en fer allant de 0,1 à 0,2mol/l, il suffit d'ajouter 0,213 ou 0,5mol/l d'acide oxalique pour séparer le fer de l'américium.

**Exemple 16 à 21.**

Dans ces exemples, on utilise le composé n° 5 à une concentration de 0,5mol/l dans le t-butylbenzène pour séparer les traces de zirconium présentes dans des solutions aqueuses nitriques et ayant des concentrations en acide nitrique qui varient de 1 à 3mol/l auxquelles on ajoute ou non 0,1mol/l d'acide oxalique.

Dans ce cas, on met en contact un volume du solvant organique avec un volume de la solution aqueuse à 25°C pendant 10min, puis on sépare les deux phases et on détermine les coefficients de distribution de l'américium et du zirconium.

Les résultats obtenus sont donnés dans le tableau 4.

Au vu de ces résultats, on constate qu'il suffit d'ajouter 0,1mol/l d'acide oxalique pour empêcher l'extraction du zirconium dans le solvant organique lorsque la solution nitrique de départ est 2 ou 3N.

**Exemples 22 à 29.**

Dans ces exemples, on utilise le composé n°4 à une concentration de 0,5mol/l dans du t-butylbenzène pour séparer le fer et le zirconium des actinides et lanthanides tels que l'américium, l'europium et le plutonium en utilisant le second

mode de réalisation du procédé de l'invention. Dans ce cas, on met en contact un volume d'une solution aqueuse ayant une concentration en acide nitrique de 2 ou 3mol/l, contenant des traces d'américium, d'europium, de plutonium, de fer et de zirconium, après lui avoir ajouté de 0,05 à 0,5mol/l d'acide oxalique avec un volume de solvant organique constitué par le composé n°4 à 0,5mol/l dans le t-butylbenzène. Aprés mise en contact sous agitation à 25°C pendant 10min, on sépare les deux phases et on détermine les coefficients de distribution de l'américium, de l'europium, du plutonium, du fer et du zirconium.

Les résultats obtenus sont donnés dans le tableau 5.

Au vu de ces résultats, on constate qu'avec une concentration en acide nitrique de 2 ou 3mol/l et l'addition de 0,05 à 0,2mol/l d'acide oxalique, on peut séparer le plutonium, l'américium et l'europium du fer et du zirconium.

**Exemples 30 à 47.**

Dans ces exemples, on utilise également le second mode de réalisation du procédé de l'invention pour séparer le fer et le zirconium des actinides et lanthanides en utilisant comme solvant organique le composé n° 4 à une concentration de 0,5mol/l dans du t-butylbenzène.

On part de solutions aqueuses ayant des concentrations en acide nitrique allant de 2 à 4mol/l, des concentrations en fer de 0,2 à 15g/l et des concentrations en zirconium de 0,2 à 1g/l et on ajoute à ces solutions aqueuses de 0,5 à 1mol/l d'acide oxalique. On réalise l'extraction en mettant en contact un volume de la solution aqueuse avec un volume du solvant organique sous agitation, à 25°C pendant 10min.

Les coefficients de distribution obtenus dans ces conditions sont donnés dans le tableau 6.

Au vu de ces résultats, on constate que l'addition d'acide oxalique permet de réaliser la séparation actinides et/ou lanthanides / produits de fission ou de corrosion (fer et zirconium). Toutefois, lorsque la solution aqueuse contient beaucoup de fer, il est préférable d'ajouter 0,8 à 1mol/l d'acide oxalique et d'avoir une concentration en acide nitrique de 4mol/l pour obtenir une bonne séparation.

Les résultats des exemples 12-47 sont très intéressants car l'acide oxalique est lui-même peu extractible dans les diamides utilisés comme cela apparaît dans le tableau 7.

On a indiqué dans ce tableau les valeurs du coefficient de distribution de l'acide oxalique $DH_2C_2O_4$ entre un solvant organique constitué par le composé n°4 à une concentration de 0,5mol/l dans du tertiobutylbenzéne et une solution aqueuse contenant 0,3mol/l d'acide oxalique lorsque l'on met en contact, sous agitation, à 25°C, un volume de solution aqueuse avec un volume de solvant organique.

Au vu de ce tableau, on constate que le coefficient de distribution de l'acide oxalique est très faible quelle que soit la concentration en acide nitrique de la solution aqueuse.

**Exemples 48, 49, 51, 52, 53.**

Dans ces exemples, on utilise le troisième mode de réalisation du procédé de l'invention pour séparer le fer de l'américium en ajoutant à la solution aqueuse contenant le fer et l'américium, du nitrate de sodium ou du nitrate d'ammonium en quantité telle que la concentration en $NO_3^-$ ou $NH_4^+$ soit supérieure à 5M et que la concentration en $HNO_3$ soit inférieure ou égale à 0,5M.

Pour réaliser l'extraction, on met en contact un volume d'un solvant organique constitué par du TPH contenant 0,5mol/l du composé n°1 avec un volume de la solution aqueuse ayant une concentration en acide nitrique de 0,01 à 0,5M, contenant des traces d'américium et de fer $III^+$, à 25°C pendant 60min. Après séparation des phases, on détermine les concentrations en américium et en fer et on calcule les coefficients de partage de l'américium et du fer.

Les résultats obtenus sont donnés dans le tableau 8.

**Exemples 50, 54, 55, 56.**

Dans ces exemples, on suit le même mode opératoire que dans les exemples précédents pour tenter de séparer l'américium du fer mais en utilisant des concentrations en acide nitrique de la solution aqueuse plus élevées sans adjonction de nitrate de sodium (ex. 55 et 56) ou la même concentration en acide nitrique avec adjonction de nitrate de lithium (ex. 54) et on détermine comme précédemment les coefficients de distribution de l'américium et du fer.

Les résultats obtenus sont donnés également dans le tableau 8.

Au vu de ces résultats, on constate que sans adjonction de nitrate, il est pratiquement impossible de séparer le fer de l'américium, et que l'adjonction de nitrate de lithium ne permet pas d'éviter l'extraction du fer et facilite au contraire celle-ci (ex. 54).

Enfin, on remarque que le fer et l'américium sont très peu extraits lorsque la solution aqueuse présente une acidité faible comme dans le cas de l'exemple 50.

Aussi, pour éviter l'extraction du fer par le solvant organique, il est préférable d'utiliser une solution nitrique ayant

une faible concentration en acide nitrique (≤0,1mol/l) et d'y ajouter du nitrate de sodium à une concentration d'au moins 6M.

**Exemples 57 à 68.**

Dans ces exemples, on teste l'influence du diluant sur les coefficients de partage de l'américium entre une solution aqueuse nitrique et un solvant organique comprenant comme extractant le 2-tétradécyl-N-N′-diméthyl-N,N′-dibutyl-propanediamide (composé n°1).

Dans ces exemples, on met en contact à 25°C pendant 10min, un volume d'une solution aqueuse nitrique contenant des traces d'américium avec un volume d'un solvant organique contenant comme extractant le composé n°1, en utilisant divers diluants. Aprés séparation des phases aqueuse et organique, on détermine les coefficients de partage de l'américium entre les deux phases.

Les résultats obtenus ainsi que la nature du diluant utilisé, les concentrations en composé n°1 du solvant organique et la concentration en acide nitrique de la solution aqueuse sont donnés dans le tableau 9.

Au vu de ces résultats, on constate que tous les diluants utilisés permettent d'obtenir des coefficients de partage de l'américium intéressants. Toutefois, les coefficients de partage sont plus faibles lorsqu'on utilise comme diluant le tétrachloréthyléne, mais il est possible de les améliorer en modifiant la concentration en extractant ou le rapport en volume phase organique / phase aqueuse, si nécessaire.

**Exemples 69 à 83.**

Dans ces exemples, on détermine les conditions d'apparition d'une troisième phase lors de l'extraction dans le cas d'un solvant organique utilisant comme diluant le TPH et contenant 0,5mol/l d'un extractant constitué par un propanediamide conforme à l'invention.

Dans ces exemples, on met en contact, à 25°C pendant 10min, un volume du solvant organique avec un volume d'une solution aqueuse nitrique contenant des traces d'$Am^{3+}$ et on utilise des concentrations en acide nitrique croissant jusqu'à l'obtention d'une troisième phase.

Les résultats obtenus sont donnés dans le tableau 10.

Au vu de ce tableau, on constate que l'utilisation du TPH comme diluant est possible puisque l'apparition d'une troisième phase avec une concentration en extractant de 0,5mol/l correspond à des acidités nitriques supérieures à 4mol/l, sauf dans le cas du composé n°3.

Ainsi, on peut réaliser la séparation de l'américium et des produits de corrosion tels que le fer dans de bonnes conditions, sans ajouter de décanol pour retarder l'apparition de la troisième phase comme il était recommandé dans EP-A- 0 210 928.

L'utilisation des propanediamides de l'invention est donc très intéressante.

TABLEAU 1

| Composé | Formule |
| --- | --- |
| n°1 | 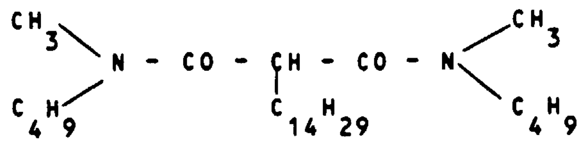 |
| n°2 | 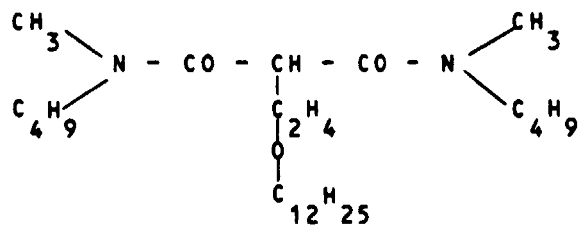 |
| n°3 | 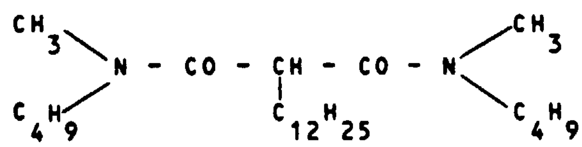 |
| n°4 | 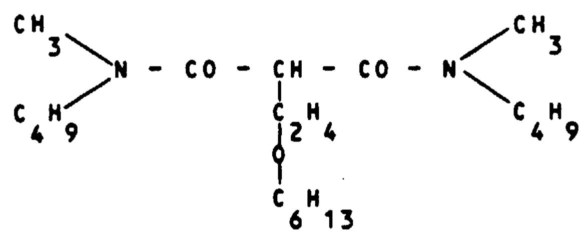 |
| n°5 | 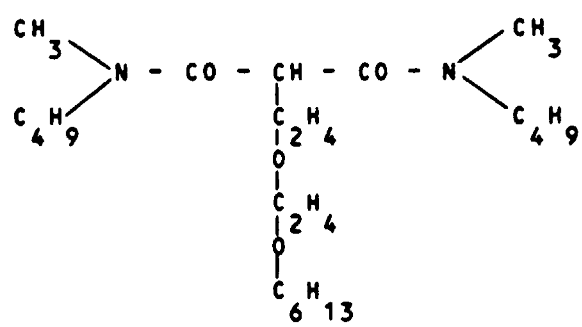 |
| n°6 | 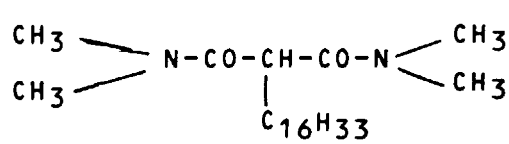 |

TABLEAU 2

| Ex. | Composé n°1 $mol.l^{-1}$ | $HNO_3$ $mol.l^{-1}$ | Coefficients | Temps de contact (en min) | | | | | | | | | | | |
|---|---|---|---|---|---|---|---|---|---|---|---|---|---|---|---|
| | | | | 0,25 | 0,5 | 1 | 2 | 3 | 5 | 10 | 20 | 30 | 40 | 50 | 60 |
| 7 | 0,5 | 2,5 | $D_{Am}$ | 1,7 | 2,0 | 2,2 | 2,2 | 2,2 | 2,0 | 1,7 | 1,6 | | | | |
| | | | $D_{Fe}$ | $3,9.10^{-2}$ | $7,5.10^{-2}$ | 0,16 | 0,26 | 0,34 | 0,47 | 0,52 | 0,49 | | | | |
| | | | FD | 22 | 27 | 14 | 8,6 | 6,5 | 4,4 | 3,2 | 3,2 | | | | |
| 8 | 0,5 | 4 | $D_{Am}$ | 7,5 | 9,4 | 8,8 | 7,1 | 6,8 | 7,6 | 6,1 | 7,0 | 6,8 | 6,8 | | |
| | | | $D_{Fe}$ | $7,5.10^{-2}$ | 0,14 | 0,29 | 0,54 | 0,94 | 2,4 | 6,1 | 14,9 | 18,2 | 18,2 | | |
| | | | FD | 100 | 67 | 30 | 13 | 7,2 | 3,2 | 1,0 | 0,47 | 0,37 | 0,37 | | |
| 9 | 0,767 | 3 | $D_{Am}$ | 7,8 | 7,9 | 8,0 | 7,7 | 7,9 | 8,0 | 7,6 | 7,5 | 7,0 | 7,1 | 6,9 | 6,3 |
| | | | $D_{Fe}$ | $7,7.10^{-2}$ | 0,13 | 0,18 | 0,27 | 0,37 | 0,55 | 1,1 | 2,1 | 3,0 | 3,9 | 4,6 | 4,4 |
| | | | FD | 101 | 61 | 44 | 28 | 21 | 14 | 7,0 | 3,6 | 2,3 | 1,8 | 1,5 | 1,4 |

Tableau 3

| Ex. | $[H_2C_2O_4]$ mol/l | $[Fe^{3+}]$ mol/l | $D_{Am}$ | $D_{Fe}$ |
|---|---|---|---|---|
| **12** | 0,213 | 0, 05 | 0,93 | 0,04 |
| **13** | 0,213 | 0,1 | 1,06 | 0,09 |
| **14** | 0,213 | 0,2 | 1,05 | 0,23 |
| **15** | 0,5 | 0,2 | 1,2 | 0,12 |

TABLEAU 4

| Ex. | $[HNO_3]$ mol/l | $[H_2C_2O_4]$ mol/l | $D_{Zr\ (IV)}$ |
|---|---|---|---|
| **16** | 1 | 0 | 0,092 |
| **17** | 1 | 0,1 | 0,02 |
| **18** | 2 | 0 | 7,86 |
| **19** | 2 | 0,1 | 0,12 |
| **20** | 3 | 0 | 170,2 |
| **21** | 3 | 0,1 | 1,46 |

Tableau 5

| Ex. | $HNO_3$ mol/l | $(H_2C_2O_4)$ mol/l | $D_{Am}$ | $D_{Eu}$ | $D_{Pu}$ | $D_{Fe}$ | $D_{Zr}$ |
|---|---|---|---|---|---|---|---|
| 22 | 2 | 0,5 | 0,275 | 0,127 | 1,44 | 0,003 | 0,004 |
| 23 | | 0,1 | 0,205 | 0,098 | 0,405 | 0,003 | 0,004 |
| 24 | | 0,2 | 0,185 | 0,088 | 0,167 | 0,002 | 0,006 |
| 25 | | 0,5 | 0,151 | 0,073 | 0,136 | 0,0005 | 0,002 |
| 26 | 3 | 0,05 | 1,306 | 0,652 | 13,33 | 0,136 | 0,024 |
| 27 | | 0,1 | 1,17 | 0,586 | 5,29 | 0,0619 | 0,014 |
| 28 | | 0,2 | 1,12 | 0,562 | 5,08 | 0,033 | 0,008 |
| 49 | | 0,5 | 0,962 | 0,484 | 1,04 | 0,0114 | 0,0047 |

TABLEAU 6

| Ex. | $HNO_3$ mol/l | $(H_2C_2O_4)$ mol/l | [Fe] g/l | [Zr] g/l | $D_{Am}$ | $D_{Eu}$ | $D_{Pu}$ | $D_{Fe}$ | $D_{Zr}$ |
|---|---|---|---|---|---|---|---|---|---|
| **30** | 2 | 0,5 | 0,2 | 0,2 | 0,172 | 0,085 | 0,06 | 0,001 | 0,002 |
| **31** | | | 0,6 | 0,6 | 0,112 | 0,062 | 0,111 | 0,001 | 0,0016 |
| **32** | | | 1 | 1 | 0,100 | 0,057 | 0,121 | 0,0012 | 0,0069 |
| **33** | 3 | 0,5 | 0,2 | 0,2 | 0,642 | 0,350 | 1,161 | 0,011 | 0,0165 |
| **34** | | | 0,6 | 0,6 | 0,658 | 0,347 | 1,448 | 0,012 | 0,0005 |
| **35** | | | 1 | 1 | 0,726 | 0,398 | 1,638 | 0,0189 | 0,0032 |
| **36** | 4 | 0,5 | 0,2 | 0,2 | 2,291 | 1,237 | 7,51 | 0,1711 | 0,0015 |
| **37** | | | 0,6 | 0,6 | 2,023 | 1,146 | 6,48 | 0,170 | 0,0134 |
| **38** | | | 1 | 1 | 1,702 | 0,962 | 7,08 | 0,206 | 0,009 |
| **39** | 3 | 0,5 | 2 | 1 | 0,617 | 0,353 | 4,46 | 0,0197 | 0,010 |
| **40** | | 0,5 | 15 | 1 | 0,734 | 0,419 | 7,23 | 0,0396 | 0,0013 |
| **41** | | 0,5 | 10 | 1 | 0,722 | 0,421 | 7,63 | 0,094 | 0,0002 |
| **42** | | 0,5 | 12 | 1 | 0,767 | 0,452 | 11,15 | 0,128 | 0,0002 |
| **43** | | 0,7 | 12 | 1 | 0,653 | 0,398 | 11,204 | 0,067 | 0,005 |
| **44** | | 0,7 | 15 | 1 | 0,646 | 0,392 | 9,69 | 0,097 | 0,0003 |
| **45** | | 0,8 | 15 | 1 | 0,630 | 0,393 | 11,67 | 0,0851 | 0,0002 |

TABLEAU 6 (suite)

| Ex. | $HNO_3$ mol/l | $(H_2C_2O_4)$ mol/l | [Fe] g/l | [Zr] g/l | $D_{Am}$ | $D_{Eu}$ | $D_{Pu}$ | $D_{Fe}$ | $D_{Zr}$ |
|---|---|---|---|---|---|---|---|---|---|
| **46** | 4 | 0,8 | 15 | 1 | 2,97 | 1,87 | 7,81 | 0,225 | 0,0002 |
| **47** | | 1 | 15 | 1 | 2,87 | 1,87 | 5,67 | 0,204 | 0,002 |

TABLEAU 7

| $(HNO_3)$ mol/l | $D_{H_2C_2O_4}$ |
|---|---|
| 0,05 | 0,08 |
| 0,1 | 0,14 |
| 1 | 0,04 |
| 6 | 0,06 |

TABLEAU 8

| Ex | 48 | 49 | 50 | 51 | 52 | 53 | 54 | 55 | 56 |
|---|---|---|---|---|---|---|---|---|---|
| $HNO_3$ mol/l | 0,01 | 0,1 | 0,1 | 0,5 | 0,5 | 0,5 | 0,5 | 2,5 | 4,5 |
| $NO_3^-$ mol/l | 6 | 6 | 0 | 6 | 5 | 5 | 5 | 0 | 0 |
| nitrate | $NaNO_3$ | $NaNO_3$ | | $NaNO_3$ | $NaNO_3$ | $NH_4NO_3$ | $LiNO_3$ | | |
| Composé n°1 mol/l | 0,5 | 0,5 | 0,487 | 0,5 | 0,5 | 0,5 | 0,5 | 0,5 | 0,5 |
| $D_{Am}$ | 0,92 | 2,3 | $2x10^{-2}$ | 7,5 | 4,7 | 0,8 | 42 | 0,99 | 7,2 |
| $D_{Fe}$ | 0,18 | 0,46 | $5x10^{-3}$ | 4,6 | 2,1 | 0,15 | 70 | 0,29 | >10 |
| F.S. $D_{Am}/D_{Fe}$ | 5 | 5 | 4 | 1,6 | 2,2 | 5,33 | 0,6 | | |

TABLEAU 9

| Ex. | Diluant | Concentration en composé n°1 (mol/l) | Concentration en $HNO_3$ (mol/l) | $D_{Am}$ |
|---|---|---|---|---|
| 57 | tétrachloréthylène | 0,487 | 3 | 0,28 |
| 58 | tétrachloréthylène | 0,487 | 4 | 0,81 |
| 59 | tétrachloréthylène | 0,487 | 5 | 1,5 |
| 60 | tétrachloréthylène | 0,487 | 6 | 1,2 |
| 61 | décaline | 0,487 | 3 | 0,81 |
| 62 | décaline | 0,487 | 4 | 2,2 |
| 63 | décaline | 0,487 | 5 | 3,5 |
| 64 | décaline | 0,487 | 6 | 2,9 |
| 65 | TPH (tétrapropylène) hydrogéné) | 0,5 | 2 | 0,61 |
| 66 | TPH (tétrapropylène) hydrogéné) | 0,5 | 3 | 3,28 |
| 67 | TPH (tétrapropylène) hydrogéné) | 0,5 | 4 | 5,65 |
| 68 | TPH (tétrapropylène) hydrogéné) | 0,5 | 4,5 | 7,2 |

TABLEAU 10

| Exemple | Extractant | Concentration en $HNO_3$ (mol/l) | $D_{Am}$ |
|---|---|---|---|
| 69 | Composé n°2 | 2 | 2,0 |
| 70 | | 2,5 | 4,1 |
| 71 | | 3 | 7,1 |
| 72 | | 4 | 13,0 |
| 73 | | 4,5 | 17,7 |
| 74 | | 4,8 | 3ème phase |
| 75 | Composé n°3 | 2 | 0,7 |
| 76 | | 3 | 3,44 |
| 77 | | 3,5 | 3ème phase |
| 78 | Composé n°1 | 2 | 0,61 |
| 79 | | 2,5 | 1,7 |
| 80 | | 3 | 3,28 |
| 81 | | 4 | 5,65 |
| 82 | | 4,5 | 7,2 |
| 83 | | 4,7 | 3ème phase |

**Revendications**

**1.** Procédé pour séparer le fer des actinides et/ou des lanthanides trivalents présents dans une solution aqueuse acide, caractérisé en ce qu'il consiste :

a) à mettre en contact la solution aqueuse acide avec un solvant organique contenant comme extractant un propanediamide de formule :

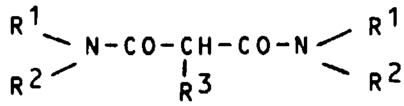 (I)

dans laquelle $R^1$ et $R^2$ qui peuvent être identiques ou différents, représentent un radical alkyle linéaire ou ramifié ayant de 1 à 25 atomes de carbone ou un radical de formule :

$$-(CH_2)_n-Z-(CH_2)_m-O\ R^4$$

dans laquelle $R^4$ est un radical alkyle de 1 à 13 atomes de carbone, n est égal à 0 ou est un nombre entier allant de 1 à 6, Z est une simple liaison ou un atome d'oxygène et m est un nombre entier allant de 1 à 6, à condition que Z soit une simple liaison lorsque n est égal à 0, et $R^3$ représente un radical alkyle de 12 à 25 atomes de carbone, pendant une durée de 15s à 5 minutes, et

b) à séparer le solvant organique ayant extrait les actinides et/ou les lanthanides de la solution aqueuse contenant le fer.

**2.** Procédé selon la revendication 1, caractérisé en ce que la solution aqueuse acide est une solution nitrique ayant une concentration en acide nitrique de 2 à 5mol/l.

**3.** Procédé selon l'une quelconque des revendications 1 et 2, caractérisé en ce que la concentration en propanediamide du solvant organique est de 0,1 à 2mol/l.

**4.** Procédé selon l'une quelconque des revendications 1 à 3, caractérisé en ce que le propanediamide répond à la formule :

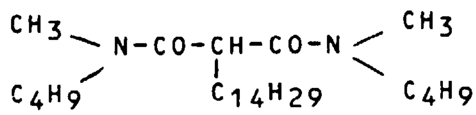

**5.** Procédé selon l'une quelconque des revendications 1 à 3, caractérisé en ce que le propanediamide répond à la formule :

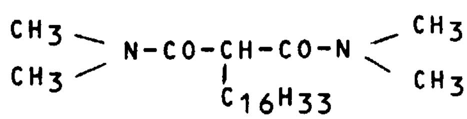

**6.** Procédé pour séparer le fer et/ou le zirconium des actinides et/ou des lanthanides trivalents présents dans une solution aqueuse acide, caractérisé en ce qu'il consiste :

a) à ajouter de l'acide oxalique à la solution aqueuse,

b) à mettre en contact la solution aqueuse acide contenant l'acide oxalique, avec un solvant organique contenant comme extractant un propanediamide de formule :

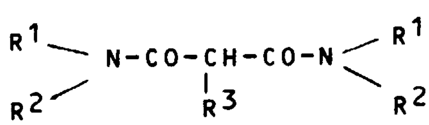

dans laquelle $R^1$ et $R^2$ qui peuvent être identiques ou différents, représentent un radical alkyle linéaire ou ramifié ayant de 1 à 25 atomes de carbone ou un radical de formule :

$$-(CH_2)_n-Z-(CH_2)_m-O-R^4$$

dans laquelle $R^4$ est un radical alkyle de 1 à 13 atomes de carbone, n est égal à 0 ou est un nombre entier allant de 1 à 6, Z est une simple liaison ou un atome d'oxygène et m est un nombre entier allant de 1 à 6, à condition que Z soit une simple liaison lorsque n est égal à 0, et $R^3$ représente un radical alkyle de 12 à 25

atomes de carbone ou un radical de formule :

$$-(CH_2)_n-Z-(CH_2)_m-O-R^4$$

dans laquelle n, m, Z et $R^4$ ont la signification donnée ci-dessus, et

c) à séparer le solvant organique ayant extrait les actinides et/ou les lanthanides de la solution aqueuse contenant le fer et/ou le zirconium.

**7.** Procédé selon la revendication 6, caractérisé en ce que la quantité d'acide oxalique ajoutée à la solution aqueuse acide est de 0,05 à 0,5mol/l.

**8.** Procédé selon l'une quelconque des revendications 6 et 7, caractérisé en ce que la solution aqueuse acide est une solution nitrique ayant une concentration en acide nitrique de 2 à 4 mol/l.

**9.** Procédé pour séparer le fer des actinides et/ou des lanthanides trivalents présents dans une solution aqueuse acide, caractérisé en ce qu'il consiste :

a) à ajouter à la solution aqueuse acide un nitrate de formule $(NO_3)_vM$ dans laquelle M est $NH_4$ ou un métal sauf le lithium et v est la valence de M,

b) à mettre en contact la solution aqueuse acide ainsi traitée avec un solvant organique contenant comme extractant un propanediamide de formule :

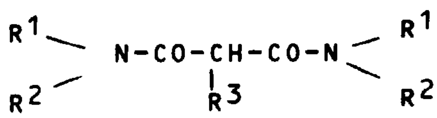

dans laquelle $R^1$ et $R^2$ qui peuvent être identiques ou différents, représentent un radical alkyle linéaire ou ramifié ayant de 1 à 25 atomes de carbone ou un radical de formule :

$$-(CH_2)_n-Z-(CH_2)_m-O-R^4$$

dans laquelle $R^4$ est un radical alkyle de 1 à 13 atomes de carbone, n est égal à 0 ou est un nombre entier allant de 1 à 6, Z est une simple liaison ou un atome d'oxygène et m est un nombre entier allant de 1 à 6, à condition que Z soit une simple liaison lorsque n est égal à 0, et $R^3$ représente un radical alkyle de 12 à 25 atomes de carbone ou un radical de formule :

$$-(CH_2)_n-Z-(CH_2)_m-O-R^4$$

dans laquelle n, m, Z et $R^4$ ont la signification donnée ci-dessus, et

c) séparer le solvant organique ayant extrait les actinides et/ou les lanthanides de la solution aqueuse contenant le fer.

**10.** Procédé selon la revendication 9, caractérisé en ce que la quantité de nitrate $(NO_3)_vM$ ajoutée est telle que la concentration en $NO_3^-$ de la solution aqueuse soit d'au moins 6mol/l.

**11.** Procédé selon la revendication 10, caractérisé en ce que la solution aqueuse acide est une solution nitrique ayant une concentration en acide nitrique inférieure à 0,1mol/l.

**12.** Procédé selon l'une quelconque des revendications 9 à 11, caractérisé en ce que le propane diamide répond à la formule :

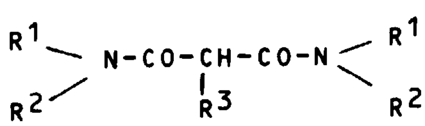 (I)

$R_1 = CH_3$ $R_2 = C_4H_9$ $R_3 = C_{14}H_{29}$

**13.** Procédé selon l'une quelconque des revendications 1 à 12, caractérisé en ce que le solvant organique comprend un diluant choisi parmi le benzène, le xylène, le mésitylène, le tertiobutylbenzène, le dodécane, le tétrapropylène hydrogéné, la décaline et le tétrachloréthylène.

**Patentansprüche**

1. Verfahren zur Abtrennung von Eisen aus einer Actiniden und/oder trivalenten Lanthaniden enthaltenden wäßrigen Säurelösung
**dadurch gekennzeichnet**,
daß sie darin besteht:

    a) die wäßrige Lösung während einer Dauer von 15s bis 5 Minuten in Kontakt zu bringen mit einem organischen Lösungsmittel, das als Extraktionsmittel Propandiamid der Formel:

    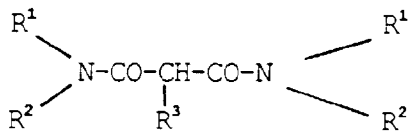
    (1)

    enthält, in welcher $R^1$ und $R^2$, die identische oder verschieden sein können, ein lineares oder verzweigte Alkylradikal darstellen, das 1 bis 25 Kohlenstoffatome hat, oder ein Radikal der Formel:

    $$-(CH^2)_n-Z-(CH_2)_m-O-R^4$$

    in welcher $R^4$ ein Alkylradikal aus 1 bis 13 Kohlenstoffatomen ist, n gleich 0 oder eine ganze Zahl zwischen 1 und 6 ist, Z eine einfache Verbindung oder ein Sauerstoffatom ist und m eine ganze Zahl zwischen 1 und 6 ist, unter der Bedingung, daß Z eine einfache Verbindung sei, wenn n gleich 0 ist, und $R^3$ ein Alkylradikal aus 12 bis 25 Kohlenstoffatomen darstellt, und
    b) das organische Lösungsmittel, das die Actinide und/oder Lanthanide extrahiert hat, von der das Eisen enthaltenden wäßrigen Lösung zu trennen.

2. Verfahren gemäß Anspruch 1, dadurch gekennzeichnet, daß die wäßrige Säurelösung eine Stickstofflösung ist, die eine Konzentration an Salpetersäure von 2 bis 5 mol/l hat.

3. Verfahren gemäß einem der Ansprüche 1 und 2, dadurch gekennzeichnet, daß die Konzentration an Propandiamid des organischen Lösungsmittels 0,1 bis 2 mol/l beträgt.

4. Verfahren gemäß einem der Ansprüche 1 bis 3, dadurch gekennzeichnet, daß das Propandiamid der Formel:

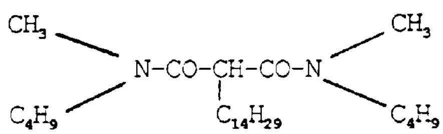

entspricht.

5. Verfahren gemäß einem der Ansprüche 1 bis 3, dadurch gekennzeichnet, daß das Propandiamid der Formel:

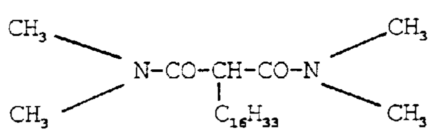

entspricht.

6. Verfahren zur Abtrennung von Eisen und/oder Zirkonium aus einer Actinide und/oder trivalente Lanthanide enthaltenden wäßrigen Säurelösung, dadurch gekennzeichnet, daß es darin besteht:

    a) Oxalsäure zu der wäßrigen Lösung zuzufügen,
    b) die Osalsäure enthaltende, wäßrige Säurelösung mit einem organischen Lösungsmittel in Kontakt zu bringen, das als Extraktionsmittel Propandiamid der Formel:

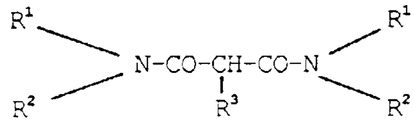

enthält, in welcher $R^1$ und $R^2$, die identisch oder verschieden sein können, ein lineares oder verzweigtes Alkylradikal, das 1 bis 25 Kohlenstoffatome hat, oder ein Radikal der Formel:

$$-(CH_2)_n-Z-(CH_2)_m-O-R^4$$

darstellen, in welcher $R^4$ ein Alkylradikal mit 1 bis 13 Kohlenstoffatomen ist, n gleich 0 oder eine ganze Zahl zwischen 1 und 6 ist, Z eine einfache Verbindung oder ein Sauerstoffatom ist, und m eine ganze Zahl zwischen 1 und 6 ist, unter der Bedingung, daß Z eine einfache Verbindung ist, wenn n gleich 0 ist, und $R^3$ ein Alkylradikal mit 12 bis 25 Kohlenstoffatomen oder ein Radikal der Formel:

$$-(CH_2)_n-Z-(CH_2)_m-O-R^4$$

darstellt, in welcher n, m, Z und $R^4$ dieselben, oben angegebenen Bedeutungen haben, und
c) das organische Lösungsmittel, welches die Actinide und/oder Lanthanide extrahiert hat, von der wäßrigen Lösung zu trennen, die das Eisen und/oder das Zirkonium enthält.

**7.** Verfahren gemäß Anspruch 6, dadurch gekennzeichnet, daß die Menge an Oxalsäure, die zur wäßrigen Säurelösung zugefügt wird, 0,05 bis 0,5 mol/l beträgt.

**8.** Verfahren gemäß einem der Ansprüche 6 und 7, dadurch gekennzeichnet, daß die wäßrige Säurelösung eine Stickstofflösung ist, die eine Konzentration an Salpetersäure von 2 bis 4 mol/l hat.

**9.** Verfahren zur Abtrennung von Eisen aus einer Actinide und/oder trivalente Lanthanide enthaltenden wäßrigen Säurelösung, dadurch gekennzeichnet, daß es darin besteht:

a) zu der wäßrigen Säurelösung ein Nitrat der Formel $(NO_3)_vM$ zuzufügen, in welcher M $NH_4$ oder ein Metall außer Lithium ist und v die Valenz von M ist,
b) die somit behandelte wäßrige Säurelösung mit einem organischen Lösungsmittel in Kontakt zu bringen, das als Extraktionsmittel Propandiamid der Formel:

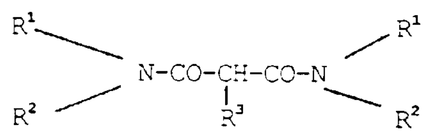

enthält, in welcher $R^1$ und $R^2$, die identisch oder verschieden sein können, ein lineares oder verzweigtes Alkylradikal, das 1 bis 25 Kohlenstoffatome hat, oder ein Radikal der Formel:

$$-(CH_2)_n-Z-(CH_2)_m-O-R^4$$

darstellen, in welcher $R^4$ en Alkylradikal von 1 bis 13 Kohlenstoffatomen ist, n gleich 0 oder eine ganze Zahl zwischen 1 bis 6 ist, Z eine einfache Verbindung oder ein Sauerstoffatom ist und m eine ganze Zahl zwischen 1 und 6 ist, unter der Bedingung, daß Z eine einfache Verbindung sei wenn n gleich 0 ist, und $R^3$ ein Alkylradikal von 12 bis 25 Kohlenstoffatomen oder ein Radikal der Formel:

$$-(CH_2)_n-Z-(CH_2)_m-O-R^4$$

darstellt, in welcher n, m, Z und $R^4$ die oben gegebene Bedeutung haben, und
das organische Lösungsmittel, das die Actinide und/cder Lanthanide extrahiert hat, von der wäßrigen Lösung zu trennen, die das Eisen enthält.

**10.** Verfahren gemäß Anspruch 9, dadurch gekennzeichnet, daß die Menge an zugefügtem Nitrat $(NO_3)_vM$ so ist, daß die Konzentration an $NO_3^-$ der wäßrigen Lösung mindestens 6mol/l beträgt.

**11.** Verfahren gemäß Anspruch 10, dadurch gekennzeichnet, daß die wäßrige Säurelösung eine Stickstofflösung ist, die eine Konzentration an Salpetersäure kleiner 0,1 mol/l hat.

**12.** Verfahren gemäß einem der Ansprüche 9 bis 11, dadurch gekennzeichnet, daß das Propandiamid der Formel:

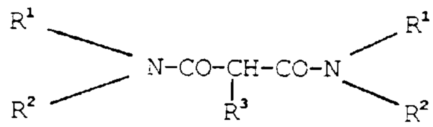 (I)

entspricht, wobei $R^1 = CH_3$, $R^2 = C_4H_9$ und $R^3 = C_{14}H_{29}$.

**13.** Verfahren gemäß einem der Ansprüche 1 bis 12, dadurch gekennzeichnet, daß das organische Lösungsmittel ein Verdünnungsmittel umfaßt, das unter Benzol, Xylol, Mesitylen, Tertiobutylbenzol, Dodecan, hydrogeniertem Tetrapropylen, Dekalin und Tetrachhlorethylen ausgewählt wird.

**Claims**

**1.** Process for separating iron from trivalent lanthanides and/or actinides present in an aqueous acid solution, characterized in that it comprises:

a) contacting the aqueous acid solution with an organic solvent containing as the extractant a propane diamide of formula:

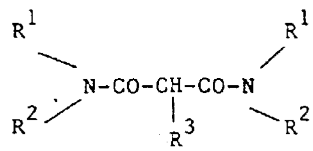 (I)

in which $R^1$ and $R^2$, which can be the same or different, represent a straight or branched alkyl radical with 1 to 25 carbon atoms or a radical of formula:

$$-(CH_2)_n-Z-(CH_2)_m-O-R^4$$

in which $R^4$ is an alkyl radical with 1 to 13 carbon atoms, n is equal to 0 or an integer from 1 to 6, Z is a single bond or an oxygen atom and m is an integer from 1 to 6, provided that Z is a single bond when n is equal to 0, and $R^3$ represents an alkyl radical with 12 to 25 carbon atoms, for between 15 seconds and 5 minutes and b) separating the organic solvent having extracted the actinides and/or lanthanides from the aqueous solution containing the iron.

**2.** Process according to claim 1, characterized in that the aqueous acid solution is a nitric solution with a nitric acid concentration of 2 to 5 mole/l.

**3.** Process according to either of the claims 1 and 2, characterized in that the propane diamide concentration of the organic solvent is 0.1 to 2 mole/l.

**4.** Process according to any one of the claims 1 to 3, characterized in that the propane diamide complies with the formula:

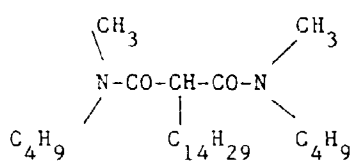

**5.** Process according to any one of the claims 1 to 3, characterized in that the propane diamide complies with the formula:

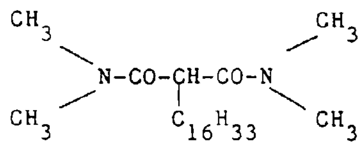

6. Process for separating iron and/or zirconium from trivalent lanthanides and/or actinides present in an aqueous acid solution, characterized in that it comprises:

a) adding oxalic acid to the aqueous solution,
b) contacting the aqueous acid solution containing the oxalic acid with an organic solvent containing as the extractant a propane diamide of formula:

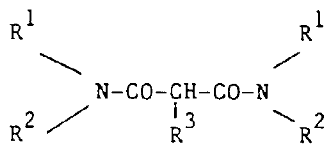

in which $R^1$ and $R^2$, which can be the same or different, represent a straight or branched alkyl radical with 1 to 25 carbon atoms, or a radical of formula:

$$-(CH_2)_n-Z-(CH_2)_m-O-R^4$$

in which $R^4$ is an alkyl radical with 1 to 13 carbon atoms, n is equal to 0 or is an integer from 1 to 6, Z is a single bond or a hydrogen atom and m is an integer from 1 to 6, provided that Z is a single bond when n is equal to 0 and $R^3$ represents an alkyl radical with 12 to 25 carbon atoms, or a radical of formula:

$$-(CH_2)_n-Z-(CH_2)_m-O-R^4$$

in which m, Z and $R^4$ have the meanings given hereinbefore, and
c) separating the organic solvent which extracted the actinides and/or lanthanides from the aqueous solution containing the iron and/or zirconium.

7. Process according to claim 6, characterized in that the oxalic quantity added to the aqueous solution is 0.05 to 0.5 mole/l.

8. Process according to either of the claims 6 and 7, characterized in that the aqueous acid solution is a nitric solution with a nitric acid concentration of 2 to 4 mole/l.

9. Process for separating iron from trivalent lanthanides and/or actinides present in an aqueous acid solution, characterized in that it comprises:

a) adding to the aqueous acid solution a nitrate of formula $(NO_3)M_v$, in which M is $NH_4$ or a metal, except Li and v is the valency of said metal,
b) contacting the thus treated aqueous acid solution with an organic solvent containing as the extractant a propane diamide of formula:

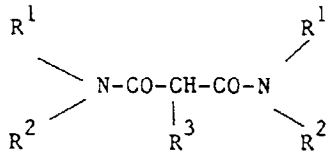

in which $R^1$ and $R^2$, which can be the same or different, represent a straight or branched alkyl radical with 1 to 25 carbon atoms or a radical of formula:

$$-(CH_2)_n-Z-(CH_2)_m-O-R^4$$

in which $R^4$ is an alkyl radical with 1 to 13 carbon atoms, n is equal to 0 or an integer from 1 to 6, Z is a single

bond or an oxygen atom and m is an integer from 1 to 6, provided that Z is a single bond when n is equal to 0, and $R^3$ represents an alkyl radical having 12 to 25 carbon atoms, or a radical of formula:

$$-(CH_2)_n-Z-(CH_2)_m-O-R^4$$

in which n, m, Z and $R^4$ have the meanings given hereinbefore, and

c) separating the organic solvent which has extracted the actinides and/or lanthanides from the aqueous solution containing the iron.

**10.** Process according to claim 9, characterized in that the quantity of nitrate $(NO_3)_vM$ added is such that the $NO_3^-$ concentration of the aqueous solution is at least 6 mole/l.

**11.** Process according to claim 10, characterized in that the aqueous acid solution is a nitric solution with a nitric acid concentration below 0.1 mole/l.

**12.** Process according to any one of the claims 9 to 11, characterized in that the propane diamide complies with the formula:

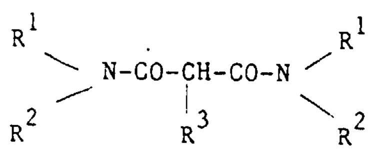

(I)

$R^1 = CH_3$ $R^2 = C_4H_9$ $R^3 = C_{14}H_{29}$

**13.** Process according to any one of the claims 1 to 12, characterized in that the organic solvent comprises a diluent chosen from among benzene, xylene, mesitylene, tert. butyl benzene, dodecane, hydrogenated tetrapropylene, decalin and tetrachloroethylene.